# FASCICULE DE BREVET EUROPEEN

(11) **EP 0 781 950 B1**
(45) Date de publication et mention de la délivrance du brevet: **04.10.2001**
(21) Numéro de dépôt: 96402519.1
(22) Date de dépôt: 22.11.1996
(51) Int. Cl.: F16K 17/32

(54) **Dispositif d'alimentation en fluide gazeux d'un réseau de distribution**
Gaszuführungssystem für ein Verteilnetz
Gas supply device for a distribution network

(30) Priorité: 01.12.1995 FR 9514215
(43) Date de publication de la demande: 02.07.1997
(73) Titulaire: GAZ DE FRANCE, 75017 Paris (FR)
(72) Inventeur: Fourmont, Yves, 91100 Villabe (FR)
(74) Mandataire: Thévenet, Jean-Bruno

(56) Documents cités:
- FR-A- 1 308 119
- FR-A- 2 204 777
- FR-A- 2 392 304
- FR-A- 2 573 840
- US-A- 3 009 479

## Description

La présente invention a pour objet un dispositif d'alimentation en fluide gazeux d'un réseau de distribution comprenant un ensemble de postes de détente de gaz, chaque poste de détente comprenant au moins un régulateur-détendeur muni d'un clapet disposé sur une conduite principale, une vanne pilote et une vanne de sécurité munie d'un clapet disposé sur ladite conduite principale.

Dans tout réseau de distribution de gaz, il est nécessaire d'assurer une protection du réseau aval contre soit un manque de pression aval, soit une surpression aval. Dans des conditions normales de fonctionnement, la régulation de la pression aval en sortie d'un poste de détente est effectuée par un régulateur-détendeur qui constitue l'organe essentiel de ce poste de détente, ce régulateur-détendeur étant lui-même associé à une vanne pilote sensible à la pression aval et pouvant commander la fermeture d'une vanne de sécurité disposée dans le poste de détente afin d'interrompre l'alimentation du réseau aval en cas de surpression aval ou au contraire d'une pression aval trop faible.

On connaît déjà différents types de postes de détente dans lesquels une vanne de sécurité mécanique se ferme automatiquement en cas d'anomalie au niveau de la pression aval. Toutefois, dans un réseau de distribution comprenant un grand nombre de postes de détente, lorsqu'un poste est défaillant, il est fréquent qu'une surpression en aval provoque la fermeture en cascade des vannes de sécurité de plusieurs postes de détente, alors même que le régulateur-détendeur d'un seul poste de détente est défaillant. Il est alors nécessaire de vérifier l'ensemble des postes de détente et de réenclencher manuellement les différentes vannes de sécurité après identification et réparation du poste de détente défectueux.

Il existe également des dispositifs de protection de réseaux maillés de distribution de gaz qui permettent d'identifier le poste de détente dans lequel un régulateur-détendeur est défectueux. Toutefois, dans ce cas, le dispositif de protection est spécifique à un type de régulateur-détendeur particulier et ne peut pas être installé de façon universelle, quelle que soit la structure du régulateur-détendeur.

On a également proposé d'associer dans un poste de détente deux régulateurs-détendeurs par mesure de sécurité. Une telle redondance complète implique toutefois un coût d'équipement et de maintenance très élevé.

L'invention vise à remédier aux inconvénients précités et à permettre en particulier, à l'aide d'un appareillage universel, indépendant de la structure particulière d'un régulateur-détendeur, et de faible coût, installable sur l'ensemble des postes de détente d'un réseau de distribution de gaz existant, de garantir à la fois un fonctionnement classique de fermeture automatique des vannes de sécurité des différents postes de détente en cas d'apparition, en aval de ces postes de détente, de conditions anormales de surpression, et une identification du poste de détente réellement défectueux, évitant une intervention manuelle sur l'ensemble des postes de détente ayant réagi aux conditions anormales de pression aval.

Ces buts sont atteints grâce à un dispositif d'alimentation en fluide gazeux d'un réseau de distribution comprenant un ensemble de postes de détente de gaz, chaque poste de détente comprenant au moins un régulateur-détendeur muni d'un clapet disposé sur une conduite principale, une vanne pilote et une vanne de sécurité munie d'un clapet disposé sur ladite conduite principale, caractérisé en ce que chaque poste de détente comprend en outre un organe différentiel coopérant avec la vanne pilote et la vanne de sécurité disposée en amont du régulateur-détendeur pour assurer une fermeture automatique de la vanne de sécurité commandée par la vanne pilote lorsque la pression aval dans la conduite principale en aval du poste de détente concerné dépasse une valeur de seuil prédéterminée, et provoquer automatiquement, après un rétablissement de ladite pression aval en dessous de ladite valeur de seuil prédéterminée, soit la réouverture de ladite vanne de sécurité si le régulateur-détendeur du poste de détente concerné n'introduit lui-même aucune fuite au niveau du son clapet, soit le maintien de la fermeture de cette vanne de sécurité si ledit régulateur-détendeur présente une absence d'étanchéité au niveau de son clapet.

De façon plus particulière, pour chaque poste de détente, la vanne de sécurité comprend un clapet solidaire d'un piston délimitant une première chambre de piston reliée par une conduite à la vanne pilote, et la vanne pilote est elle-même reliée par une conduite à un tronçon de conduite principale situé en aval du régulateur-détendeur.

Pour chaque poste de détente, l'organe différentiel est relié par des première et deuxième conduites de détection, d'une part, à un tronçon de conduite principale situé en amont de la vanne de sécurité et, d'autre part, à un tronçon de conduite principale situé entre la vanne de sécurité et le régulateur-détendeur et l'organe différentiel est en outre relié à la vanne pilote par une conduite de commande.

Pour chaque poste de détente l'organe différentiel comprend un clapet de décompression à l'atmosphère relié à ladite conduite de commande et dont l'ouverture est provoquée lors d'un déséquilibre entre les pressions appliquées sur lesdites première et deuxième conduites de détection.

Avantageusement, pour permettre une mise en oeuvre dans des réseaux à alimentation en gaz à pressions différentes, pour chaque poste de détente, l'organe différentiel est relié à la vanne pilote par l'intermédiaire d'un prédétendeur.

Selon un premier mode de réalisation possible, pour chaque poste de détente, la vanne de sécurité comprend un ressort de fermeture du clapet, et le piston de la vanne de sécurité est actionné pneumatiquement à l'ouverture à partir de la vanne pilote par l'admission d'une pression dans ladite première chambre délimitée par le piston en opposition à la force exercée par ledit ressort.

Selon un deuxième mode de réalisation possible, pour chaque poste de détente le piston de la vanne de sécurité est actionné pneumatiquement à l'ouverture et à la fermeture à partir de la vanne pilote par l'admission, dans des première et deuxième chambres situées de part et d'autre du piston de la vanne de sécurité, respectivement d'une pression en provenance de l'organe différentiel et de la pression aval dans le tronçon de la conduite principale situé en aval du régulateur-détendeur.

Quel que soit le mode de réalisation envisagé, pour chaque poste de sécurité,
(a) lorsque la pression aval dans le tronçon de conduite principale situé en aval du régulateur-détendeur est inférieure à ladite valeur de seuil et si le régulateur-détendeur du poste de détente concerné n'introduit lui-même aucune fuite au niveau de son clapet, la vanne pilote introduit dans ladite première chambre de la vanne de sécurité une pression issue de l'organe différentiel qui est supérieure à ladite pression aval,
(b) lorsque ladite pression aval est supérieure à ladite valeur de seuil, la vanne pilote introduit dans ladite première chambre de la vanne de sécurité ladite pression aval, et
(c) lorsque ladite pression aval est inférieure à ladite valeur de seuil, et si le régulateur-détendeur du poste de détente concerné introduit une fuite au niveau de son clapet, la vanne pilote introduit dans ladite première chambre de la vanne de sécurité une pression issue de l'organe différentiel qui est inférieure à ladite pression aval.

Selon une caractéristique particulière, qui permet de tenir compte d'éventuelles microfuites dues à une vanne pilote, et de calibrer une tolérance dans le fonctionnement d'une vanne de sécurité, pour chaque poste de détente, un robinet avec orifice calibré est monté en dérivation sur la vanne de sécurité.

Chaque poste de sécurité peut en outre être équipé d'un pressostat permettant une identification du poste défaillant par télédétection.

L'invention peut être appliquée à un réseau d'alimentation maillé dans lequel le rétablissement d'une continuité d'alimentation est assuré par les autres postes de détente en cas de défaillance d'un poste de détente particulier, ou à un réseau d'alimentation en antenne équipé de lignes de secours pour le rétablissement d'une continuité d'alimentation en cas de défaillance d'un poste de détente particulier.

D'autres caractéristiques et avantages de l'invention apparaîtront à la lecture de la description suivante de modes particuliers de réalisation, donnés à titre d'exemples non limitatifs en référence aux dessins annexés, sur lesquels :
- la Figure 1 est une vue schématique montrant un réseau de distribution de gaz comportant un ensemble de postes de détente ;
- la Figure 2 est une vue schématique d'un poste de détente conforme à un premier mode de réalisation de l'invention et placé dans une configuration de fonctionnement normal en l'absence de défaut et d'anomalie au niveau de la pression en aval du poste de détente ;
- la Figure 3 est une vue schématique du poste de détente de la Figure 2, mais montrant un défaut dans le régulateur-détendeur du poste de détente conduisant à une augmentation de la pression en aval du poste de détente ;
- la Figure 4 est une vue schématique du poste de détente des Figures 2 et 3 après rétablissement automatique dans le réseau d'une pression normale en aval du poste de détente ;
- la Figure 5 est une vue schématique d'un poste de détente conforme à un deuxième mode de réalisation et placé dans une configuration de fonctionnement normal en l'absence de défaut et d'anomalie au niveau de la pression en aval du poste de détente ;
- la Figure 6 est une vue schématique du poste de détente de la Figure 5, mais montrant un défaut dans le régulateur-détendeur du poste de détente conduisant à une augmentation de la pression en aval du poste de détente ; et
- la Figure 7 est une vue schématique du poste de détente des Figures 5 et 6 après rétablissement automatique dans le réseau d'une pression normale en aval du poste de détente.

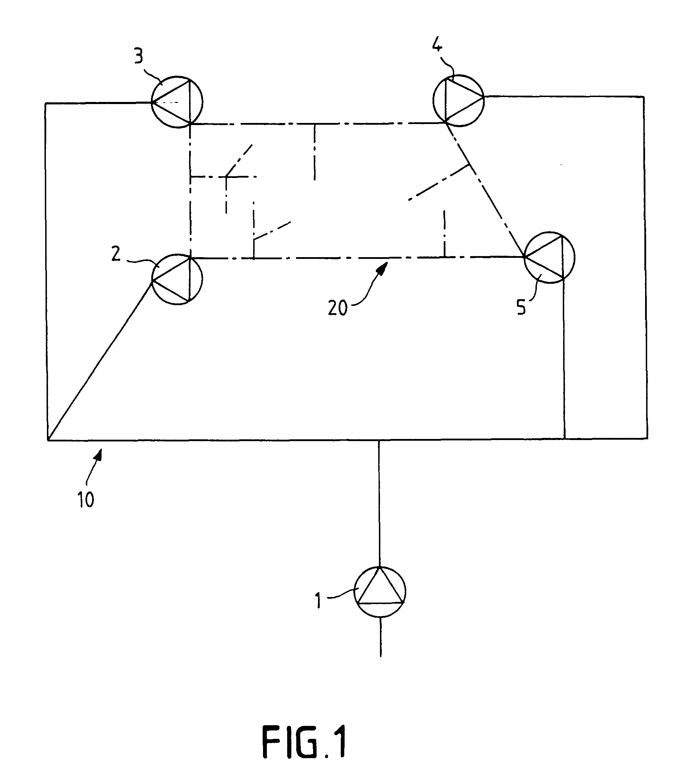

La Figure 1 montre de façon très schématique un réseau de distribution de gaz 10, 20 comportant un ensemble de postes de détente 1 à 5 équipés chacun d'un régulateur-détendeur associé à une vanne de sécurité. De façon plus particulière, mais non limitative, dans l'exemple de la Figure 1, un poste de détente principal 1 alimente un réseau primaire 10 moyenne pression, par exemple à une pression de l'ordre de 16 bar, ce réseau primaire 10 comprenant diverses conduites (représentées en traits pleins) reliant le poste de détente principal 1 à des postes de détente secondaires 2 à 5 qui alimentent eux-mêmes un réseau secondaire 20 basse pression, par exemple à une pression de 4 bar. Le réseau secondaire 20 (comportant des conduites dessinées en traits mixtes sur la Figure 1) peut lui-même être un réseau maillé, c'est-à-dire pour lequel, en cas de défaillance de l'un des postes de détente, tel que le poste de détente 2 par exemple, l'alimentation du réseau secondaire 20 doit continuer d'être assurée par les autres postes de détente non défaillants 3 à 5. Le réseau secondaire 20 peut aussi être un réseau en étoile dans lequel une ligne de secours est associée à chaque poste de détente 2 à 5 et peut être mise en service automatiquement en cas de défaillance de l'un des postes de détente, tel que le poste de détente 2 par exemple. Naturellement, le réseau principal 10 peut de la même manière comporter plusieurs postes de détente associés au sein d'un réseau de distribution maillé ou en étoile.

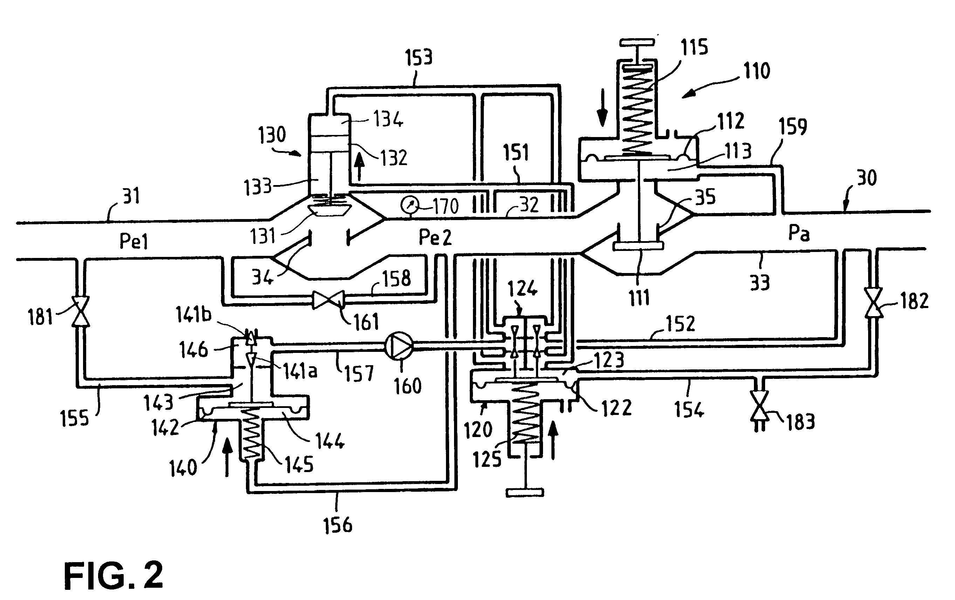

Au cas où un poste de détente, tel que le poste 2 par exemple, devient défaillant, par exemple par suite d'une fuite au niveau du clapet du régulateur-détendeur de ce poste de détente, il se produit une surpression en aval du poste de détente 2 qui va conduire à la fermeture automatique de la vanne de sécurité de ce poste de détente 2. L'augmentation de la pression aval va toutefois provoquer également, dans un premier temps, une augmentation de la pression en aval d'autres postes de détente 3, 4 ou 5 ne présentant eux-mêmes aucun comportement défectueux. Les vannes de sécurité de ces postes de détente 3, 4 ou 5 vont donc également se fermer. Comme cela va être expliqué ci-dessous en référence aux Figures 2 à 7, l'invention permet un réenclenchement rapide des postes de détente 3 à 5 non défectueux par réouverture rapide des clapets des vannes de sécurité de ces postes, tout en assurant le maintien de la fermeture de la vanne de sécurité du poste de détente défectueux et une identification de celui-ci, ce type de fonctionnement étant rendu possible quelle que soit la structure particulière des régulateurs-détendeurs qui peuvent conserver une configuration classique, dès lors que la commande du réenclenchement des postes de détente non défectueux s'effectue à partir de la prise en compte de la simple évolution de la pression en aval de ces postes de détente.

On considérera maintenant en premier lieu les Figures 2 à 4. Sur une conduite principale 30 sont disposés en cascade les deux organes essentiels d'un poste de détente classique, à savoir une vanne de sécurité 130 et un régulateur-détendeur 110. Ces organes principaux coopèrent avec une vanne pilote 120 et un différentiel 140. La vanne de sécurité 130 comporte un clapet 131 qui coopère avec un siège de clapet 34 disposé dans la conduite principale 30. De même, le régulateur-détendeur 110 comporte un clapet 111 coopérant avec un siège de clapet 35 disposé dans la conduite 30 en aval du siège de clapet 34. La conduite principale 30 définit un tronçon de conduite amont 31 où règne une pression Pe₁ et qui se situe en amont de la vanne de sécurité 130, un tronçon de conduite intermédiaire 32 où règne une pression Pe₂ et qui se situe entre la vanne de sécurité 130 et le régulateur-détendeur 110, et un tronçon de conduite aval 33 où règne une pression aval Pa.

Le régulateur-détendeur 110 présente une configuration classique avec un clapet 111 solidaire d'une membrane 112 délimitant une chambre 113 dans laquelle est introduit, par une conduite 159 en communication avec le tronçon de conduite aval 33, du gaz à la pression aval Pa. La membrane 112 agit elle-même à l'encontre d'un ressort taré 115 monté de façon à permettre une ouverture plus ou moins importante du clapet 111 en fonction de l'évolution de la pression aval Pa qui, en fonctionnement normal, est inférieure aux pressions Pe₁ et Pe₂.

La vanne de sécurité 130 comporte elle-même un clapet 131 solidaire d'un piston 132 qui délimite une chambre inférieure 133 et une chambre supérieure 134 de part et d'autre du piston 132. Les chambres 133 et 134 sont en communication, par des lignes 151, 153, avec le distributeur 124 de la vanne pilote 120 double voie qui comporte elle-même, de façon classique, une membrane 122 qui coopère avec un ressort taré 125 et délimite une chambre 123 en communication, par une ligne 154, avec le tronçon de conduite aval 33.

Le différentiel 140 comporte une membrane 142 délimitant une première chambre 143 en communication, par une ligne 155, avec le tronçon de conduite amont 31, et une deuxième chambre 144 en communication, par une ligne 156, avec le tronçon de conduite intermédiaire 32. La membrane 142 coopère en outre avec un ressort taré 145 et un clapet 141 de décompression à l'atmosphère qui agit pour mettre une troisième chambre 146 en communication soit avec la première chambre 143, soit avec l'atmosphère. La troisième chambre 146 est en communication, par une conduite 157, avec le distributeur 124 de la vanne pilote 120. Un prédétendeur 160 est de préférence interposé sur la conduite 157 de manière à permettre un fonctionnement universel du distributeur 124 de la vanne pilote 120, quel que soit le niveau de la pression amont Pe₁ (moyenne ou basse pression).

Sur la Figure 2, on voit des robinets 181 et 182,183 disposés respectivement sur les conduites 155 et 154. Les robinets 181,182,183 sont facultatifs et servent essentiellement à faciliter l'étalonnage de l'ensemble du dispositif.

De même, la référence 170 désigne un point de branchement possible pour un pressostat permettant de surveiller, par exemple à distance, l'évolution de la pression Pe₂ dans le tronçon intermédiaire 32 de chaque poste de détente.

La conduite 158 montée en dérivation sur la vanne de sécurité 130 est équipée d'un robinet 161 avec un orifice calibré et permet le cas échéant d'établir une tolérance au cas où une microfuite au niveau de la vanne pilote 120 engendrerait une anomalie. Par une petite fuite permanente contrôlée au niveau du robinet 161, il est possible de calibrer la tolérance et de s'affranchir du défaut constitué par ladite microfuite existant au niveau de la vanne pilote 120. La conduite 158 et le robinet 161 ne constituent ainsi qu'une option permettant à l'installation de fonctionner même avec une vanne pilote 120 légèrement défectueuse.

Dans l'état de fonctionnement de la Figure 2, où la pression aval Pa dans le tronçon aval 33 ne dépasse pas une valeur de seuil prédéterminée, la chambre supérieure 134 de la vanne de sécurité 130 reçoit, par la conduite 153, dédoublée au niveau du distributeur à deux voies 124 de la vanne pilote 120 en position ouverte, la pression aval Pa, tandis que la chambre inférieure 133 de la vanne de sécurité 130 reçoit, par la conduite 151, dédoublée au niveau du distributeur à deux voies 124 de la vanne pilote 120, une pression issue de la conduite 157 et du prédétendeur 160 à partir du différentiel 140 en position d'ouverture, et qui est telle que le clapet 131 de la vanne de sécurité 130 est en position ouverte. Dans ce cas, la pression Pe₂ dans le tronçon de conduite intermédiaire 32 est égale à la pression amont Pe₁ dans le tronçon de conduite amont 31.

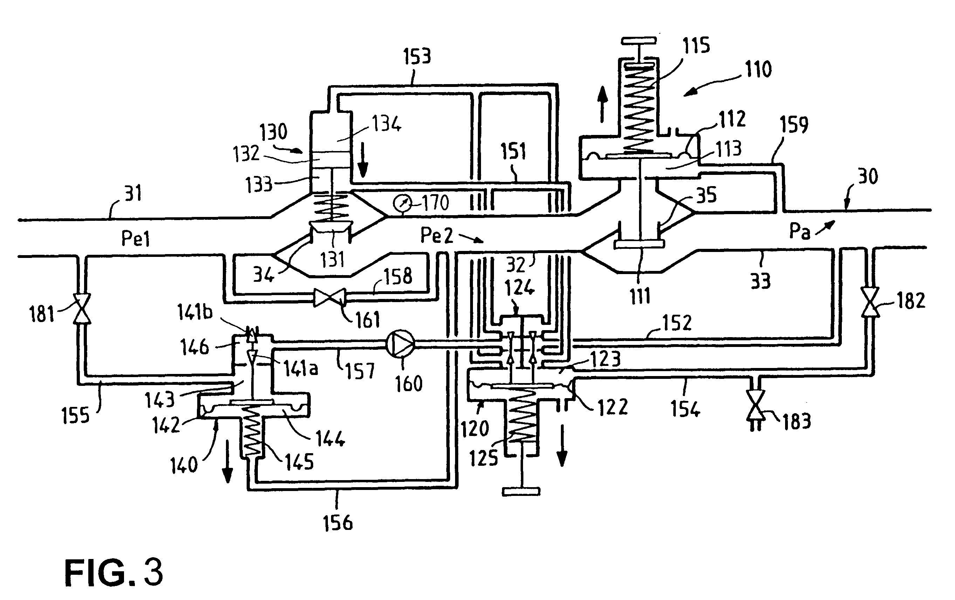

La Figure 3 montre le poste de détente de la Figure 2 dans le cas où la pression aval Pa augmente fortement d'une façon anormale, par exemple par suite d'un défaut d'étanchéité au niveau du clapet 111 du régulateur-détendeur 110. Dans ce cas, la vanne pilote 120 a changé d'état et a permis, par le distributeur 124 et la conduite 151, l'introduction de la pression aval Pa, supérieure à la normale, dans la chambre inférieure 133 de la vanne de sécurité assurant une décompression de cette chambre, tandis qu'il est introduit une pression de fermeture du clapet 131 de la vanne de sécurité dans la chambre supérieure 134 de cette dernière, à partir de la conduite 153, du distributeur 124 et de la conduite 157.

Dans l'étape de fonctionnement de la Figure 3, le clapet 111 du régulateur-détendeur 110 a tendance à être en position fermée contre le siège de clapet 35. La membrane 122 de la vanne pilote 120 est elle-même sollicitée vers le bas avec l'ensemble mobile du distributeur 124 qui a conduit à provoquer la fermeture du clapet 131 de la vanne de sécurité 130 comme indiqué plus haut. Du fait de l'existence d'un défaut au niveau du clapet 111 du régulateur-détendeur 110, la pression Pe₂ a tendance à décroître dans le tronçon intermédiaire 32 ce qui, par l'intermédiaire de la liaison 156 avec la chambre 144 du différentiel 140, tend à provoquer le déplacement vers le bas de la membrane 142 et de l'équipage mobile associé qui comprend un clapet 141a d'obturation du passage entre la chambre 146 et la chambre 143 et un clapet 141b de décompression à l'atmosphère de la chambre 146.

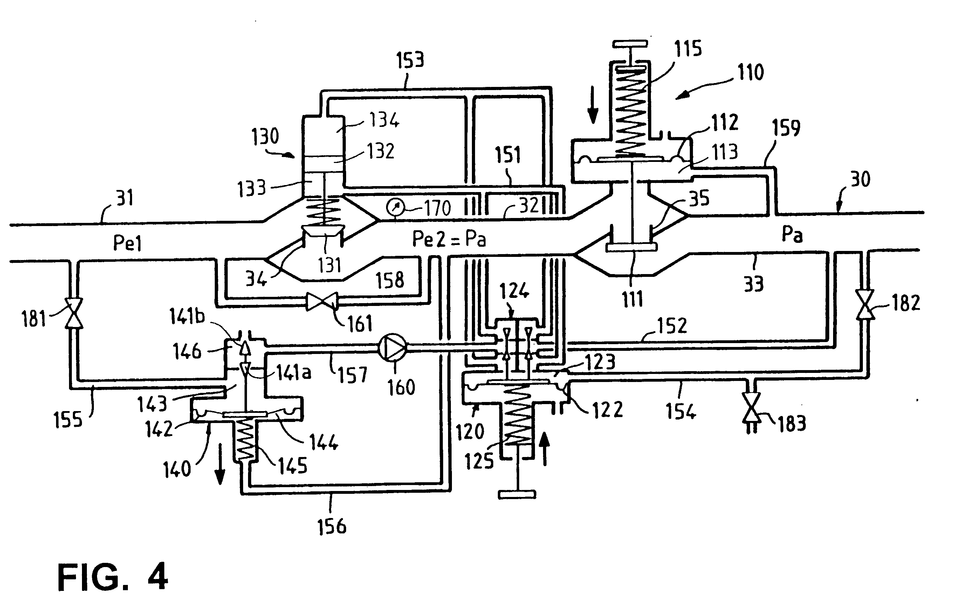

La Figure 4 montre la situation du poste de détente à la fin du processus de l'étape de la Figure 3. Du fait de la fuite existant au niveau du clapet 111 du régulateur-détendeur 110, la pression Pe₂ dans le tronçon de conduite intermédiaire 32 a diminué jusqu'à parvenir à un équilibre avec la pression Pa régnant en aval du clapet 111 du régulateur-détendeur 110.

L'évolution de la pression Pe₂ dans le tronçon intermédiaire 32 crée un déséquilibre par rapport à la pression amont Pe₁ dans le tronçon amont 31, ce déséquilibre se retrouvant de part et d'autre de la membrane 142 du différentiel 140, la chambre 143 restant à la pression Pe₁ tandis que la chambre 144 voit sa pression Pe₂ chuter à la valeur de la pression aval Pa. L'équipage mobile du différentiel 140 est alors sollicité vers le bas, ce qui provoque la fermeture du clapet 141a, empêchant une communication entre les chambres 143 et 146, et l'ouverture du clapet 141b qui met en communication la chambre supérieure 146 avec l'atmosphère. Il s'ensuit que la conduite 157 ne permet plus d'appliquer une pression de commande au distributeur 124 de la vanne pilote 120 de sorte que la vanne pilote 120 ne peut plus assurer la commande de la vanne de sécurité 130.

Le poste de détente de la Figure 4 est alors totalement isolé puisque la vanne de sécurité 130 reste fermée. La pression aval Pa du réseau en aval du régulateur-détendeur 110 redevient normale dès lors que la desserte est alors assurée soit par une ligne de secours dans le cas d'un réseau en antenne, soit par un autre poste de détente non défaillant dans le cas d'un réseau maillé. La télédétection du poste de détente défaillant peut être effectuée par exemple à partir des informations d'un pressostat 170 disposé dans le tronçon de conduite intermédiaire 32.

Dans le cas des postes de détente du même réseau équipés du dispositif décrit ci-dessus et possédant un régulateur-détendeur non défaillant, l'étape de la Figure 3 est initiée, c'est-à-dire que l'asservissement de la pression aval Pa dans le tronçon aval 33 provoqué par le dysfonctionnement du régulateur-détendeur 110 de l'un des postes de détente associés du même réseau, provoque également la fermeture automatique du clapet de la vanne de sécurité 130, la vanne pilote 120 jouant le même rôle que lorsque l'accroissement de pression aval Pa est dû à une défaillance du régulateur-détendeur 110 du même poste. En revanche, dès lors qu'un poste de détente comporte un régulateur-détendeur sans défaut, aucune fuite ne se produit au niveau du clapet 111 du régulateur-détendeur 110 et la pression Pe₂ dans le tronçon de conduite 32 reste égale à la pression amont Pe₁. Le différentiel 140 reste alors dans la position d'ouverture des Figures 2 et 3 et ne permet pas la fermeture du clapet 141a ni l'ouverture du clapet 141b de décompression à l'atmosphère. Dès lors qu'une pression de commande est maintenue sur la conduite 157 et, à travers le prédetendeur 160, peut alimenter le distributeur 124 de la vanne pilote 120, dès le rétablissement d'une pression aval Pa normale, c'est-à-dire inférieure à un seuil de pression prédéterminé, la vanne pilote 120 peut commander la réouverture automatique du clapet 131 de la vanne de sécurité 130 et ramener le poste de détente dans la configuration de régulation normale de la Figure 2.

Le dispositif de la présente invention permet bien un réarmement automatique des postes de détente sans défaut pour lesquels la vanne de sécurité a été fermée à cause d'une surpression temporaire en aval du poste de détente, tout en garantissant qu'un poste de détente défaillant reste hors service et conserve une vanne de sécurité en position fermée tant que ce poste de détente conserve un régulateur-détendeur défaillant.

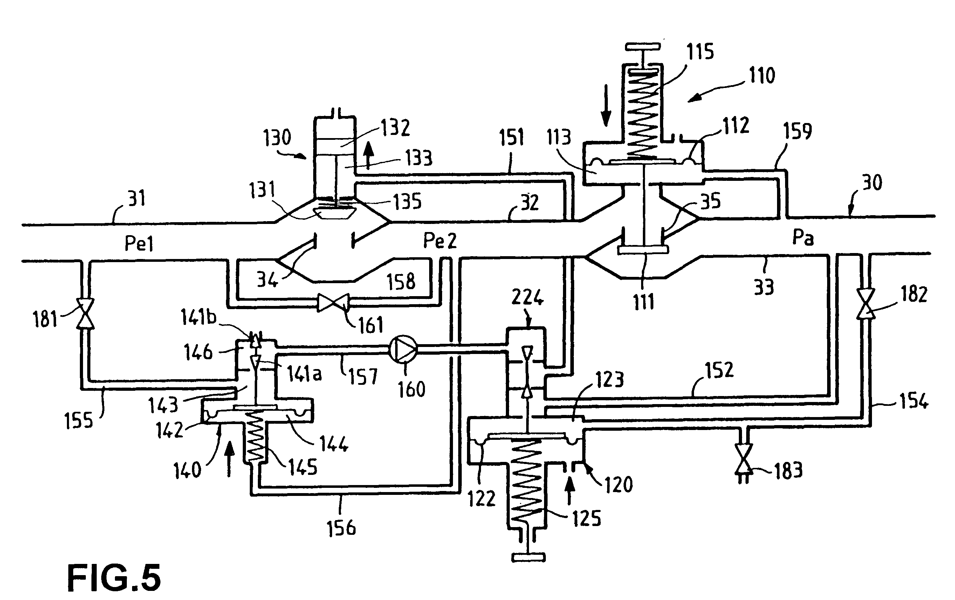

Les Figures 5 à 7 montrent un autre mode de réalisation possible de l'invention, qui est très semblable à celui des Figures 2 à 4, mais dans lequel la vanne de sécurité 130 n'est pas commandée pneumatiquement à l'ouverture et à la fermeture par la vanne pilote 120 comme dans le cas des Figures 2 à 4. Les nombreux éléments communs aux deux modes de réalisation ne seront pas décrits à nouveau et portent les mêmes numéros de référence.

La différence essentielle du mode de réalisation des Figures 5 à 7 par rapport au mode de réalisation des Figures 2 à 4 réside dans le fait que le clapet 131 de la vanne de sécurité 130 n'est plus actionné pneumatiquement qu'à l'ouverture. En revanche, la commande de fermeture de ce clapet 131 n'est plus effectuée pneumatiquement, mais à l'aide d'un ressort 135 qui agit sur l'équipage mobile de façon équivalente à la pression précédemment appliquée sur le piston 132 dans la chambre supérieure 134 du mode de réalisation des Figures 2 à 4. Dans le cas du mode de réalisation des Figures 5 à 7, le distributeur 224 de la vanne pilote 120 peut être simplifié puisqu'il n'est plus relié qu'au tronçon aval 33 de conduite principale par la conduite 152, à la chambre inférieure 133 de la vanne de sécurité par une conduite unique 151 et au différentiel 140 par la conduite 157 de le prédétendeur 160.

Les Figures 5 à 7 correspondent à des étapes de fonctionnement qui sont respectivement semblables aux étapes de fonctionnement des Figures 2 à 4.

Dans le cas de la Figure 5, l'ouverture du clapet 131 de la vanne de sécurité est commandée par l'admission d'une pression dans la chambre 133, cette pression étant obtenue à partir de la pression amont Pe₁, par l'intermédiaire du différentiel 140, de la conduite 157, du prédétendeur optionnel 160, du distributeur 224 de la vanne pilote 120 et de la conduite 151. La pression dans la chambre 133 de la vanne de sécurite 130 agit en opposition à la force exercée par le ressort 135.

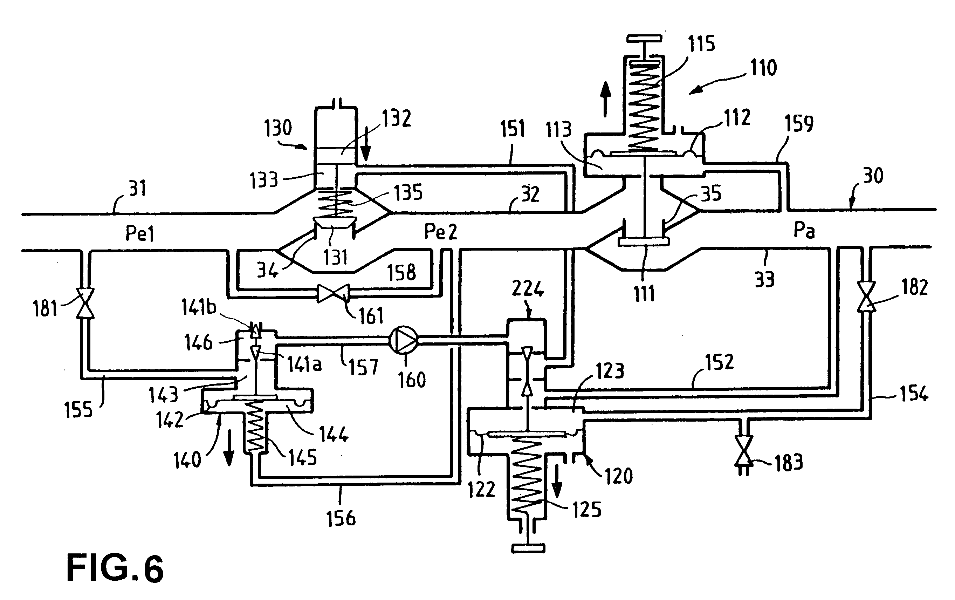

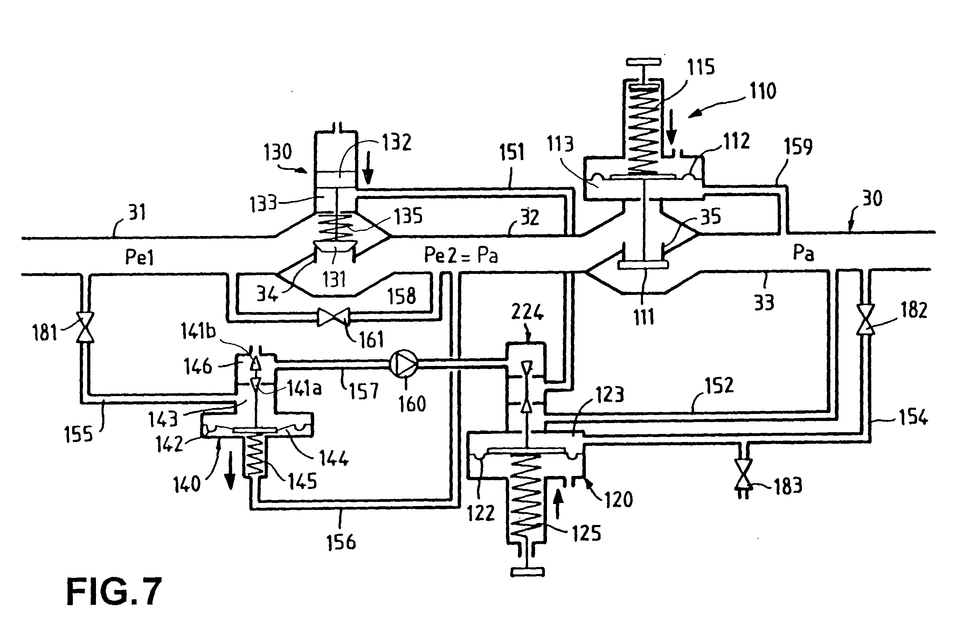

En régime normal (Figure 5), la pression dans la chambre 133 située sous le piston 132 demeure constante. En cas de surpression dans le réseau aval (Figure 6), l'état du distributeur 224 de la vanne pilote 120 change et la pression chute dans la chambre 133, la pression aval Pa remplaçant la pression obtenue à partir de la pression amont Pe₁. Comme dans le cas du mode de réalisation des Figures 2 à 4, si le régulateur-détendeur 110 du poste concerné est exempt de défaut, l'alimentation de la vanne pilote 120 à partir d'une pression dérivée de la pression amont Pe₁ reste assurée par le différentiel 140 et la vanne de sécurité 130 peut être réenclenchée de façon automatique dès le rétablissement d'une pression aval Pa normale dans le tronçon de conduite aval 33 qui permet un retour à la configuration de la Figure 5. En revanche, lorsque le régulateur-détendeur 110 du poste concerné est défaillant, c'est-à-dire non étanche, la pression Pe₂ dans le tronçon intermédiaire de conduite 32 chute jusqu'à atteindre la valeur de la pression aval Pa, ce qui provoque un changement d'état du différentiel 140 qui, par la décompression à l'atmosphère effectuée par le clapet 141b, désarme la vanne pilote 120 qui ne peut provoquer la réouverture du clapet 131 tant que le régulateur-détendeur 110 reste défaillant (configuration de la Figure 7).

On notera que sur les schémas des Figures 2 à 7, le différentiel 140 et la vanne pilote 120 ont été présentés comme des appareils distincts afin de faliciter la compréhension du fonctionnement et différencier les différentes fonctions. Ces deux appareils, différentiel 140 et vanne pilote 120, peuvent le cas échéant être regroupés dans un même ensemble structurel dès lors que les fonctionnalités décrites ci-dessus sont respectées. De la même façon, la vanne de sécurité 130 pourrait être remplacée par la combinaison d'un robinet disposé en amont du poste de détente, et d'un vérin commandé par la vanne pilote 120. On notera aussi que l'on peut prévoir sur la vanne de sécurité 130 un dispositif pneumatique d'admission ou d'échappement de gaz apte à être commandé manuellement de façon à être en mesure de fermer manuellement ladite vanne.

D'une façon générale, le dispositif selon l'invention permet d'automatiser les blocs de détente afin de garantir la continuité de l'alimentation en gaz des réseaux, suite à des déclenchements en cascade, liés à une montée en pression provoquée par un régulateur-détendeur défectueux. Ce dispositif permet un diagnostic rapide et sûr quant à l'identification du régulateur-détendeur perturbateur puisque, après quelques instants, seule la vanne de sécurité associée au régulateur-détendeur perturbateur restera en position de fermeture, tous les autres postes de détente du même réseau (équipés du même dispositif) ayant été réenclenchés de façon automatique.

## Revendications

1. Dispositif d'alimentation en fluide gazeux d'un réseau de distribution (10, 20) comprenant un ensemble de postes de détente de gaz (1 à 5), chaque poste de détente (1 à 5) comprenant au moins un régulateur-détendeur (110) muni d'un clapet (111) disposé sur une conduite principale (30), une vanne pilote (120) et une vanne de sécurité (130) munie d'un clapet (131) disposé sur ladite conduite principale (30),
**caractérisé en ce que** chaque poste de détente (1 à 5) comprend en outre un organe différentiel (140) coopérant avec la vanne pilote (120) et la vanne de sécurité (130) disposée en amont du régulateur-détendeur (110) pour assurer une fermeture automatique de la vanne de sécurité commandée par la vanne pilote (120) lorsque la pression aval (Pa) dans la conduite principale (30) en aval du poste de détente concerné dépasse une valeur de seuil prédéterminée, et provoquer automatiquement, après un rétablissement de ladite pression aval en dessous de ladite valeur de seuil prédéterminée, soit la réouverture de ladite vanne de sécurité (130) si le régulateur-détendeur (110) du poste de détente concerné n'introduit lui-même aucune fuite au niveau du son clapet (111), soit le maintien de la fermeture de cette vanne de sécurité (130) si ledit régulateur-détendeur (110) présente une absence d'étanchéité au niveau de son clapet (111).

2. Dispositif selon la revendication 1, **caractérisé en ce que**, pour chaque poste de détente (1 à 5), la vanne de sécurité (130) comprend un clapet (131) solidaire d'un piston (132) délimitant une première chambre de piston (133) reliée par une conduite (151) à la vanne pilote (120), et **en ce que** la vanne pilote (120) est elle-même reliée par une conduite (152) à un tronçon de conduite principale (33) situé en aval du régulateur-détendeur (110).

3. Dispositif selon la revendication 1 ou 2, **caractérisé en ce que**, pour chaque poste de détente (1 à 5), l'organe différentiel (140) est relié par des première et deuxième conduites de détection (155, 156), d'une part, à un tronçon de conduite principale (31) situé en amont de la vanne de sécurité (130) et, d'autre part, à un tronçon de conduite principale (32) situé entre la vanne de sécurité (130) et le régulateur-détendeur (110) et **en ce que** l'organe différentiel (140) est en outre relié à la vanne pilote (120) par une conduite de commande (157).

4. Dispositif selon la revendication 3, **caractérisé en ce que**, pour chaque poste de détente (1 à 5), l'organe différentiel (140) comprend un clapet (141a, 141b) de décompression à l'atmosphère relié à ladite conduite de commande (157) et dont l'ouverture est provoquée lors d'un déséquilibre entre les pressions appliquées sur lesdites première et deuxième conduites de détection (155, 156).

5. Dispositif selon l'une quelconque des revendications 1 à 4, **caractérisé en ce que**, pour chaque poste de détente (1 à 5), la vanne de sécurité (130) comprend un ressort (135) de fermeture du clapet (131), et **en ce que** le piston (132) de la vanne de sécurité (130) est actionné pneumatiquement à l'ouverture à partir de la vanne pilote (120) par l'admission d'une pression dans ladite première chambre (133) délimitée par le piston (132) en opposition à la force exercée par ledit ressort (135).

6. Dispositif selon l'une quelconque des revendications 1 à 4, **caractérisé en ce que**, pour chaque poste de détente (1 à 5), le piston (132) de la vanne de sécurité (130) est actionné pneumatiquement à l'ouverture et à la fermeture à partir de la vanne pilote (120) par l'admission, dans des première et deuxième chambres (133,134) situées de part et d'autre du piston (132) de la vanne de sécurité (130), respectivement d'une pression en provenance de l'organe différentiel (140) et de la pression aval dans le tronçon de la conduite principale (33) situé en aval du régulateur-détendeur (110).

7. Dispositif selon la revendication 2, **caractérisé en ce que**, pour chaque poste de sécurité (1 à 5),
(a) lorsque la pression aval (Pa) dans le tronçon de conduite principale (33) situé en aval du régulateur-détendeur (110) est inférieure à ladite valeur de seuil et si le régulateur-détendeur (110) du poste de détente concerné n'introduit lui-même aucune fuite au niveau de son clapet (111), la vanne pilote (120) introduit dans ladite première chambre (133) de la vanne de sécurité (130) une pression issue de l'organe différentiel (140) qui est supérieure à ladite pression aval,
(b) lorsque ladite pression aval (Pa) est supérieure à ladite valeur de seuil, la vanne pilote (120) introduit dans ladite première chambre (133) de la vanne de sécurité (130) ladite pression aval (Pa), et
(c) lorsque ladite pression aval (Pa) est inférieure à ladite valeur de seuil, et si le régulateur-détendeur (110) du poste de détente concerné introduit une fuite au niveau de son clapet (111), la vanne pilote (120) introduit dans ladite première chambre (133) de la vanne de sécurité (130) une pression issue de l'organe différentiel (140) qui est inférieure à ladite pression aval (Pa).

8. Dispositif selon la revendication 3, **caractérisé en ce que**, pour chaque poste de détente (1 à 5), l'organe différentiel (140) est relié à la vanne pilote (120) par l'intermédiaire d'un prédétendeur (160).

9. Dispositif selon l'une quelconque des revendications 1 à 8, **caractérisé en ce que**, pour chaque poste de détente (1 à 5), un robinet (161) avec orifice calibré est monté en dérivation sur la vanne de sécurité (130).

10. Dispositif selon l'une quelconque des revendications 1 à 9, **caractérisé en ce que** chaque poste de détente (1 à 5) est équipé d'un pressostat (170) permettant une identification d'un poste défaillant par télédétection.

11. Dispositif selon l'une quelconque des revendications 1 à 10, **caractérisé en ce qu'**il est appliqué à un réseau d'alimentation maillé (10, 20) dans lequel le rétablissement d'une continuité d'alimentation est assuré par les autres postes de détente (1, 3, 4, 5) en cas de défaillance d'un poste de détente particulier (2).

12. Dispositif selon l'une quelconque des revendications 1 à 10, **caractérisé en ce qu'**il est appliqué à un réseau d'alimentation en antenne équipé de lignes de secours pour le rétablissement d'une continuité d'alimentation en cas de défaillance d'un poste de détente particulier.

## Patentansprüche

1. Vorrichtung für die Zuführung eines gasförmigen Fluids zu einem Verteilnetz (10, 20), welche eine Gruppe von Gasdruckminderstationen (1 bis 5) umfasst, wobei die Druckminderstationen (1 bis 5) jeweils mindestens ein mit einer Klappe (111) versehenes Druckminderventil (110), das in einer Hauptleitung (30) angeordnet ist, ein Steuerventil (120) und ein mit einer Klappe (131) versehenes Sicherheitsventil (130), das in der Hauptleitung (30) angeordnet ist, enthalten, **dadurch gekennzeichnet, dass** jede Druckminderstation (1 bis 5) außerdem ein Druckdifferenzorgan (140) enthält, welches mit dem Steuerventil (120) und dem Sicherheitsventil (130) zusammenwirkt, das vor dem Druckminderventil (110) angeordnet ist, um das automatische Schließen des vom Steuerventil (120) gesteuerten Sicherheitsventils sicherzustellen, wenn der Hinterdruck (Pa) in der Hauptleitung (30) nach der betreffenden Druckminderstation einen festgelegten Grenzwert übersteigt, und um nach Wiedereinstellung des Hinterdrucks unter diesen festgelegten Grenzwert entweder das erneute Öffnen des Sicherheitsventils (130), wenn das Druckminderventil (110) der betreffenden Druckminderstation an seiner Klappe (111) keinen Gasaustritt verursacht, oder das Halten des Verschlusses des Sicherheitsventils (130), wenn das Druckminderventil (110) an seiner Klappe (111) nicht dicht ist, automatisch zu bewirken.

2. Vorrichtung nach Anspruch 1, **dadurch gekennzeichnet, dass** in jeder Druckminderstation (1 bis 5) das Sicherheitsventil (130) eine fest mit einem Kolben (132) verbundene Klappe (131) enthält, welche eine erste Kolbenkammer (133) begrenzt, die mit einer Leitung (151) zum Steuerventil (120) verbunden ist, **und dass** das Steuerventil (120) seinerseits über eine Leitung (152) mit einem Abschnitt (33) der Hauptleitung verbunden ist, der sich nach dem Druckminderventil (110) befindet.

3. Vorrichtung nach Anspruch 1 oder 2, **dadurch gekennzeichnet, dass** in jeder Druckminderstation (1 bis 5) das Druckdifferenzorgan (140) über eine erste und eine zweite Meßleitung (155, 156) einerseits mit einem Abschnitt (31) der Hauptleitung, der sich vor dem Sicherheitsventil (130) befindet, und andererseits mit einem Abschnitt (32) der Hauptleitung, der sich zwischen Sicherheitsventil (130) und Druckminderventil (110) befindet, verbunden ist, **und dass** das Druckdifferenzorgan (140) außerdem über eine Steuerleitung (157) mit dem Steuerventil (120) verbunden ist.

4. Vorrichtung nach Anspruch 3, **dadurch gekennzeichnet, dass** in jeder Druckminderstation (1 bis 5) das Druckdifferenzorgan (140) eine Entspannungsklappe (141a, 141b) in die Atmosphäre enthält, die mit der Steuerleitung (157) verbunden ist und deren Öffnung von einem Ungleichgewicht zwischen den in der ersten (155) und der zweiten Meßleitung (156) anstehenden Drücken bewirkt wird.

5. Vorrichtung nach einem der Ansprüche 1 bis 4, **dadurch gekennzeichnet, dass** in jeder Druckminderstation (1 bis 5) das Sicherheitsventil (130) eine Feder (135) für das Schließen der Klappe (131) enthält, **und dass** der Kolben (132) des Sicherheitsventils (130) bei der Öffnung, die ausgehend vom Steuerventil (120) durch Anstehen eines Drucks in der ersten Kammer (133), die von dem Kolben (132) begrenzt wird, welcher der von der Feder (135) ausgeübten Kraft entgegenwirkt, pneumatisch betätigt wird.

6. Vorrichtung nach einem der Ansprüche 1 bis 4, **dadurch gekennzeichnet, dass** in jeder Druckminderstation (1 bis 5) der Kolben (132) des Sicherheitsventils (130) beim Öffnen und Schließen pneumatisch betätigt wird, indem ausgehend vom Steuerventil (120) in der ersten (133) bzw. der zweiten Kammer (134), die sich auf der einen bzw. anderen Seite des Kolbens (132) des Sicherheitsventils (130) befinden, ein Druck ansteht, der vom Druckdifferenzorgan (140) und vom Hinterdruck im Abschnitt (33) der Hauptleitung, der sich nach dem Druckminderventil (110) befindet, aufgebaut wird.

7. Vorrichtung nach Anspruch 2, **dadurch gekennzeichnet, dass** in jeder Druckminderstation (1 bis 5), wenn
a) der Hinterdruck (Pa) in dem Abschnitt (33) der Hauptleitung, der sich nach dem Druckminderventil (110) befindet, niedriger als der Grenzwert ist und das Druckminderventil (110) der betreffenden Druckminderstation keinen Gasaustritt an seiner Klappe (111) verursacht, die erste Kammer (133) des Sicherheitsventils (130) vom Steuerventil (120) mit einem Druck beaufschlagt wird, der vom Druckdifferenzorgan (140) kommt und höher als der Hinterdruck ist,
b) der Hinterdruck (Pa) höher als der Grenzwert ist, die erste Kammer (133) des Sicherheitsventils (130) vom Steuerventil (120) mit dem Hinterdruck (Pa) beaufschlagt wird und
c) der Hinterdruck (Pa) niedriger als der Grenzwert ist und das Druckminderventil (110) der betreffenden Druckminderstation an seiner Klappe (111) einen Gasaustritt verursacht, wird die erste Kammer (133) des Sicherheitsventils (130) vom Steuerventil (120) mit einem Druck beaufschlagt, der vom Differenzdruckorgan (140) kommmt und niedriger als der Hinterdruck (Pa) ist.

8. Vorrichtung nach Anspruch 3, **dadurch gekennzeichnet, dass** in jeder Druckminderstation (1 bis 5) das Druckdifferenzorgan (140) mit dem Steuerventil (120) über ein Vordruckminderventil (160) verbunden ist.

9. Vorrichtung nach einem der Ansprüche 1 bis 8, **dadurch gekennzeichnet, dass** in jeder Druckminderstation (1 bis 5) ein Hahn (161) mit kalibrierter Öffnung in einer Umgehungsleitung am Sicherheitsventil (130) angebracht ist.

10. Vorrichtung nach einem der Ansprüche 1 bis 9, **dadurch gekennzeichnet, dass** jede Druckminderstation (1 bis 5) mit einem Druckregler (170) ausgerüstet ist, der das Auffinden einer defekten Station durch Fernmessung erlaubt.

11. Vorrichtung nach einem der Ansprüche 1 bis 10, **dadurch gekennzeichnet, dass** sie für ein vermaschtes Versorgungsnetz (10, 20) verwendet wird, in welchem im Fall einer Störung einer bestimmten Druckminderstation (2) die Wiederherstellung der Versorgungskontinuität von den anderen Druckminderstationen (1, 3, 4, 5) sichergestellt wird.

12. Vorrichtung nach einem der Ansprüche 1 bis 10, **dadurch gekennzeichnet, dass** sie für ein Ferngasversorgungsnetz verwendet wird, das im Fall einer Störung einer bestimmten Druckminderstation mit Notleitungen für die Wiederherstellung der Versorgungskontinuität ausgestattet ist.

## Claims

1. Device for supplying gaseous fluid to a distribution network (10, 20) comprising a set of gas pressure-reducing stations (1 to 5), each pressure-reducing station (1 to 5) comprising at least one pressure reducer/regulator (110) fitted with a valve element (111) arranged on a main pipe (30), a pilot valve (120) and a safety valve (130) fitted with a valve element (131) arranged on the said main pipe (30),
**characterized in that** each pressure-reducing station (1 to 5) further comprises a differential member (140) collaborating with the pilot valve (120) and the safety valve (130) located upstream of the pressure reducer/regulator (110) in order to close automatically the safety valve controlled by the pilot valve (120) when the downstream pressure (Pa) in the main pipe (30) downstream of the pressure-reducing station concerned exceeds a predetermined threshold value, and, automatically, once the said downstream pressure reestablishes itself below the said predetermined threshold value, either to cause the said safety valve (130) to reopen if the pressure reducer/regulator (110) of the pressure-reducing station concerned does not itself introduce any leakage at its valve element (111) or cause this safety valve (130) to be kept closed if the pressure reducer/regulator (110) exhibits a lack of sealing at its valve element (111).

2. Device according to Claim 1, **characterized in that**, for each pressure-reducing station (1 to 5), the safety valve (130) comprises a valve element (131) secured to a piston (132) delimiting a first piston chamber (133) connected by a pipe (151) to the pilot valve (120), and **in that** the pilot valve (120) is itself connected by a pipe (152) to a length of main pipe (33) located downstream of the pressure reducer/regulator (110).

3. Device according to Claim 1 or 2, **characterized in that**, for each pressure-reducing station (1 to 5), the differential member (140) is connected by first and second detecting pipes (155, 156) to, on the one hand, a length of main pipe (31) located upstream of the safety valve (130) and, on the other hand, to a length of main pipe (32) located between the safety valve (130) and the pressure reducer/regulator (110) and **in that** the differential member (140) is further connected to the pilot valve (120) via a control pipe (157).

4. Device according to Claim 3, **characterized in that**, for each pressure-reducing station (1 to 5), the differential member (140) comprises a valve element (141a, 141b) decompressive to the atmosphere and connected to the said control pipe (157), and the opening of which is brought about by an imbalance between the pressures applied to the said first and second detecting pipes (155, 156).

5. Device according to any one of Claims 1 to 4, **characterized in that**, for each pressure-reducing station (1 to 5), the safety valve (130) comprises a spring (135) for closing the valve element (131), and **in that** the piston (132) of the safety valve (130) is made to open pneumatically by the pilot valve (120) when a pressure that opposes the force exerted by the said spring (135) is let into the said first chamber (133) delimited by the piston (132).

6. Device according to any one of Claims 1 to 4, **characterized in that**, for each pressure-reducing station (1 to 5), the piston (132) of the safety valve (130) is made pneumatically to open and to close by the pilot valve (120) by, respectively, a pressure from the differential member (140) and the downstream pressure in the length of the main pipe (33) located downstream of the pressure reducer/regulator (110) being let into first and second chambers (133, 134) located one on each side of the piston (132) of the safety valve (130).

7. Device according to Claim 2, **characterized in that**, for each safety station (1 to 5),
a) when the downstream pressure (Pa) in the length of main pipe (33) located downstream of the pressure reducer/regulator (110) is below the said threshold value and if the pressure reducer/regulator (110) of the pressure-reducing station concerned does not itself introduce any leakage at its valve element (111), the pilot valve (120) introduces a pressure from the differential member (140), which is higher than the said downstream pressure, into the said first chamber (133) of the safety valve (130),
b) when the said downstream pressure (Pa) is greater than the said threshold value, the pilot valve (120) introduces the said downstream pressure (Pa) into the said first chamber (133) of the safety valve (130), and
c) when the said downstream pressure (Pa) is below the said threshold value, and if the pressure reducer/regulator (110) of the pressure-reducing station concerned introduces a leakage at its valve element (111), the pilot valve (120) introduces a pressure from the differential member (140) which is below the said downstream pressure (Pa) into the said first chamber (133) of the safety valve (130).

8. Device according to Claim 3, **characterized in that**, for each pressure-reducing station (1 to 5), the differential member (140) is connected to the pilot valve (120) via a pressure prereducer (160).

9. Device according to any one of Claims 1 to 8, **characterized in that**, for each pressure-reducing station (1 to 5), a throttle valve (161) with calibrated orifice is mounted as a bypass on the safety valve (130).

10. Device according to any one of Claims 1 to 9, **characterized in that** each pressure-reducing station (1 to 5) is equipped with a pressure switch (170) that allows a defective station to be identified remotely.

11. Device according to any one of Claims 1 to 10, **characterized in that** it is applied to a meshed supply network (10, 20) in which continuity of supply is re-established by the other pressure-reducing stations (1, 3, 4, 5) if one particular pressure-reducing station (2) fails.

12. Device according to any one of Claims 1 to 10, **characterized in that** it is applied to an antenna-type supply network equipped with back-up lines for re-establishing continuity of supply if one particular pressure-reducing station fails.
